# EUROPEAN PATENT SPECIFICATION

(11) **EP 4 400 006 B1**
(45) Date of publication and mention of the grant of the patent: **04.06.2025**
(21) Application number: 24150201.2
(22) Date of filing: 03.01.2024
(51) Int. Cl.: A47G 19/02, A23G 9/50

(54) **SILICONE ICE CREAM CONE**
SILIKON-EISCREMEKONUS
CÔNE DE CRÈME GLACÉE À BASE DE SILICONE

(30) Priority: 11.01.2023 US 202318152806
(43) Date of publication of application: 17.07.2024
(73) Proprietor: Grabowski, David, North Haledon, NJ 07508 (US); Grabowski, Katarzyna, North Haledon, NJ 07508 (US)
(72) Inventor: Grabowski, David, North Haledon, NJ 07508 (US); Grabowski, Katarzyna, North Haledon, NJ 07508 (US)
(74) Representative: Suszczewicz, Barbara

(56) References cited:
- KR-Y1- 200 470 228
- US-A1- 2017 231 252
- US-A1- 2018 035 690
- ANONYMOUS: "New Soda Cone Set With Valve, Green/Purple, 11 x 6.5 x 6.5 cm : Amazon.co.uk: Home & Kitchen", 23 May 2017 (2017-05-23), pages 1 - 3, XP093157655, Retrieved from the Internet <URL:https://www.amazon.co.uk/New-Soda-Valve-Green-Purple/dp/B06XKWDC9R> [retrieved on 20240403]

## Description

### BACKGROUND

Typical ice cream cones made of some edible material, such as waffle, cake, etc., tend to be messy and are limited in terms of features. Even newer ice cream cones made of reusable materials, such as plastic or hard silicone, tend to be dull, not practical and manufactured with imagination lacking.

### SUMMARY

Presented is a flexible silicone ice cream cone is configured with various design properties and features to make eating ice cream more enjoyable and clean. For example, the ice cream cone is manufactured with a pigment mixed in the silicone, so the cone changes color once engaging with the ice cream and reaches a certain color. Typically, the portions touching the cold ice cream change color while other portions that have not met the temperature remain unchanged. Once the colder portions of the ice cream cone rise in temperature, their color will change back to their original color. The exterior of the ice cream cone has a spiral ridge that extends from a bottom portion of the cone's stem toward an upper portion of the cone. The spiral ridge provides stability to the ice cream cone when in use.

An example of a silicone ice cream cone is disclosed in https://www.amazon.co.uk/New-Soda-Valve-Green-Purple/dp/B06XKWDC9R.

The object of the invention is a silicone ice cream cone, comprising: a base; a stem extending upward from the base, wherein the stem has a cavity in its interior, for receiving ice cream; an upper portion having a greater diameter relative to the stem, wherein a slope of an interior surface of the upper portion gradually transitions from a vertical orientation to a substantially horizontal orientation; a spiral ridge positioned on an exterior of the ice cream cone, wherein the spiral ridge extends from a bottom portion of the stem toward at least an upper portion of the stem. The ice cream cone includes an upper portion that gradually blossoms from its stem to be almost entirely horizontal at its top. The gradual angle creates a suction at the inside upper portion when engaged with another object, such as ice cream, thereby causing the ice cream to maintain its position inside the ice cream cone and prevent spillage. Furthermore, the angle causes the melted ice cream to slide down toward the inside cavity and its base.

The silicone ice cream cone is flexible to the extent that it can be reversible such that the exterior (spiral ridge side) can make up the inside of the ice cream cone. In this scenario, the reversible ice cream cone still functions as an effective ice cream cone. Whether in the reversed or normal position, the ice cream cone can be manipulated to accommodate different amounts of ice cream, such as a single scoop, double scoop, triple scoop, etc.

This Summary is provided to introduce a selection of concepts in a simplified form that is further described below in the Detailed Description. This Summary is not intended to identify key features or essential features of the claimed subject matter, nor is it intended to be used as an aid in determining the scope of the claimed subject matter. Furthermore, the claimed subject matter is not limited to implementations that solve any or all disadvantages noted in any part of this disclosure. These and various other features will be apparent from reading the following Detailed Description and reviewing the associated drawings.

### DESCRIPTION OF THE DRAWINGS

FIG 1 shows an illustrative perspective view of the silicone ice cream cone from an upper side;
FIG 2 shows an illustrative representation of the ice cream cone from a bottom side;
FIGs 3 and 4 show an illustrative representations of a half portion of the ice cream cone to show its interior configuration;
FIG 5 shows an illustrative representation of the ice cream cone with a scoop of ice cream on top;
FIGs 6-8 show illustrative representations of the ice cream cone in a reversible state; and
FIGs 9-14 show illustrative representations of the ice cream cone from various angles.

Like reference numerals indicate like elements in the drawings. Elements are not drawn to scale unless otherwise indicated.

### DETAILED DESCRIPTION

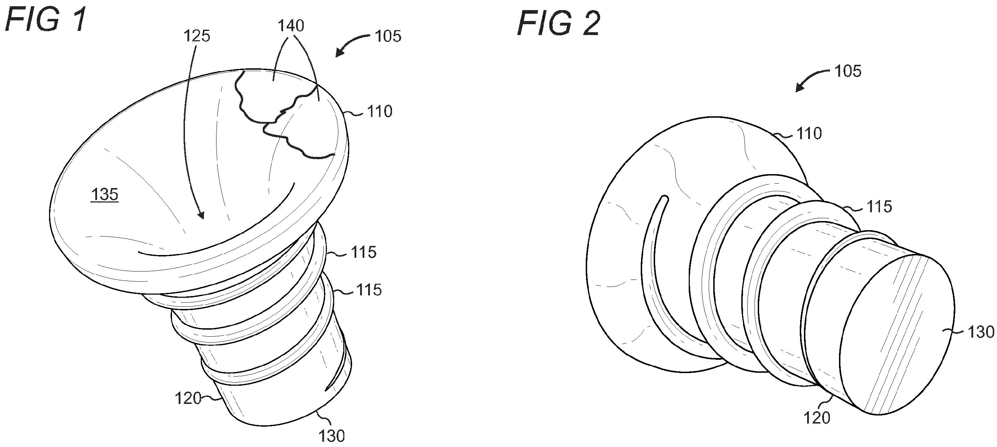

FIGs 1 and 2 show illustrative representations of a silicone ice cream cone 105 having a base 130, an upper portion 110, and an upper interior surface 135 for receiving ice cream. The ice cream cone includes a stem 120 above its base 130, and inside the stem's interior is a cavity 125 at the ice cream cone's center to hold ice cream and melted ice cream. The exterior of the stem 120 has a spiral support ridge that starts adjacent to the base and spirals toward the upper portion. In other scenarios, the spiral ridge may extend from the base itself and may extend to the top end of the upper portion 110 or the top of the stem. The spiral ridge provides stability to the ice cream cone when standing in upright position, which could otherwise collapse/ or be disformed particularly when ice cream is inside or placed just on the top of the upper interior surface 135. The spiral ridge works as structural support and at the same time saves material and provides durability for the cone in an upright position. For example, the spiral ridge provides sufficient support for the ice cream, which otherwise may not be possible without using additional silicone material (i.e., a thicker design). As discussed in further detail below, the use of the spiral ridge also enables the malleability and manipulation of the ice cream cone, which otherwise may be difficult if the cone itself is thicker. The ice cream cone is reusable and dishwasher friendly to make reuse easy.

Color-changing portions 140 are examples of the ice cream cone changing color when its temperature changes, typically when in contact with cold ice cream. In typical implementations, the entire silicone ice cream cone may be manufactured with a pigment that causes the cone to change color responsive to changes in temperature. Specifically, a specific organic thermochromic pigment is used which is configured to trigger color changing at a specific temperature. Minium pigment used is approximately half of gram per 100 grams of silicone. The pigment can be mixed in room temp above 21 to 24°C (70 to 75°F) and only with one part of liquid silicone rubber. Once the pigment is properly mixed with silicone, the colored silicone part one is mixed with an activator which sarts the process of silicone to change its state from liquid to flexible solid. Mixed silicone with the pigment is degassed in a vacuum chamber before injecting it into the mold. The silicone ice cream cones can be manufactured using different pigments, and the temperatures at which color changing occurs can be also changed to any degree. Typically, the silicone used is Food Grade and FDA (Food and Drug Administration) approved. The mixing process between the pigment and the silicone prevents the pigment from leaking out of the silicone so that they are fully intact.

Typically, only portions of the ice cream cone 105 that are changing in temperature will change color, while other portions that are room temperature or warmer will maintain their color. For example, the inside of the ice cream cone may change color since it will hold the ice cream, whereas the exterior may maintain its color. Over time, however, when the cold interior portions transfer to the exterior, the exterior may also gradually change color. Once the ice cream melts or is otherwise eaten, the cone will change to its original color once it reaches its normal room temperature.

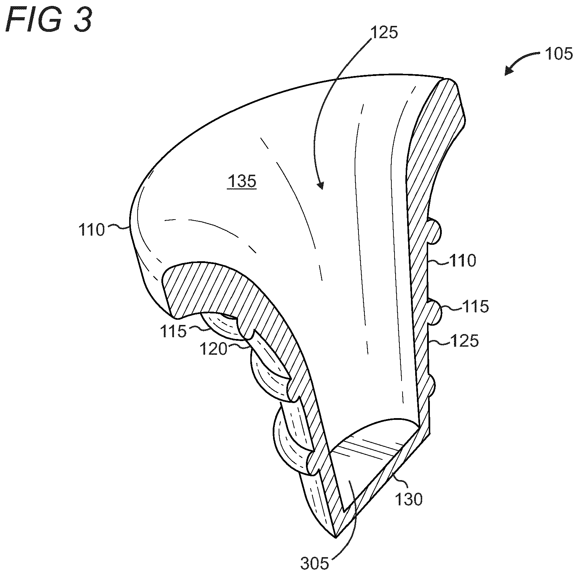

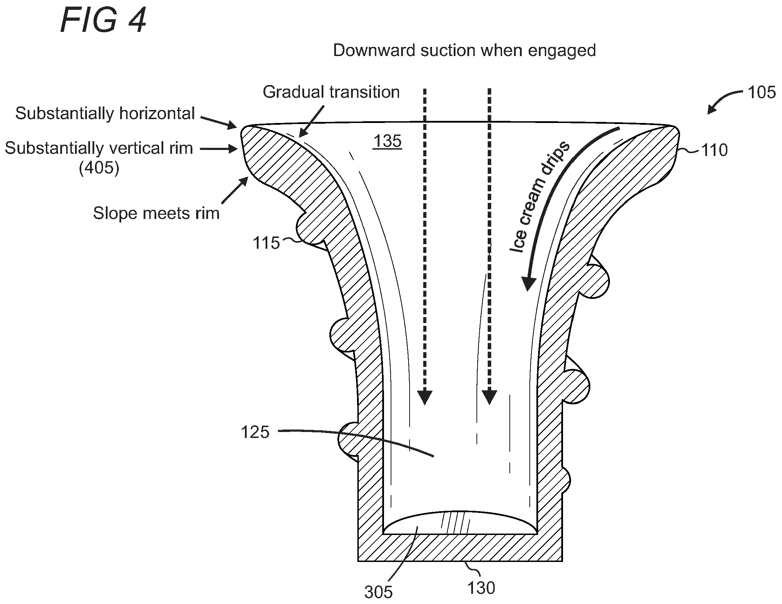

FIGs 3 and 4 show illustrative cutaway representations of the silicone ice cream cone 105 to expose its interior configuration and design. The interior of the ice cream cone includes an interior base 305 that holds ice cream or melted ice cream. The ice cream cone is configured with a specific slope, as prominently shown in FIG 4, which causes the melted ice cream to drip downward and inside the ice cream cone instead of off its edges. This helps keep a cleaner environment while eating ice cream. The specific slope of the upper portion 110 also creates a suction when the ice cream or some other object is placed over the cavity 125. As shown, the slope of the inside surface 135 gradually transitions from a vertical orientation at the cavity 125 to a substantially horizontal orientation near the end of the upper portion 110. Such slope enables a suction action against an object that covers the cavity 125. Furthermore, the exterior surface of the cone has a substantially vertical rim 405 relative to the top portion that becomes horizontal. The gradual slope on the exterior meets the vertical rim, and across from the meeting point, the interior surface 135 continues to gradually transition from a vertical to horizontal orientation.

The shape of the ice cream cone's upper portion is also designed to support the weight of the ice cream scoop so that the cone does not collapse. As shown, the ice cream cone's rim is smooth, relatively even, and free from rough edges and hard parts, making the eating experience more enjoyable.

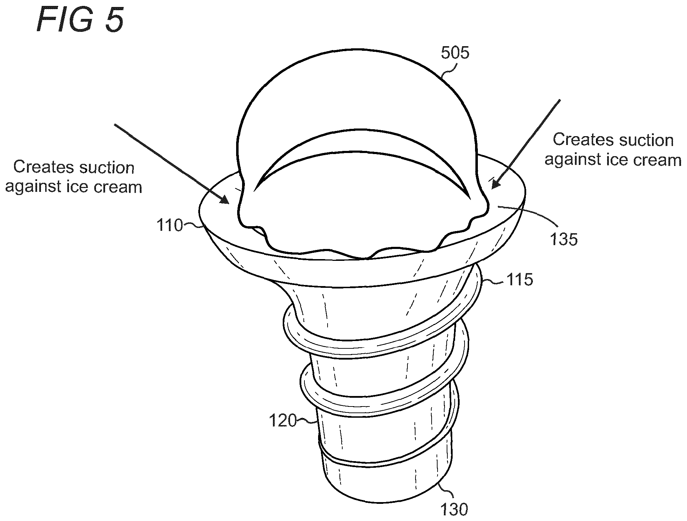

For example, FIG 5 shows an illustrative representation in which a scoop of ice cream 505 is placed on the inside surface 135 of the ice cream cone 105. Such encapsulation of the cavity 125 creates a suction against the ice cream, which at least partially prevents the ice cream from easily spilling over the end of the cone and making a mess. Furthermore, as discussed above, the slope of the upper portion 110 causes any melted ice cream to slip downward toward the interior base 305.

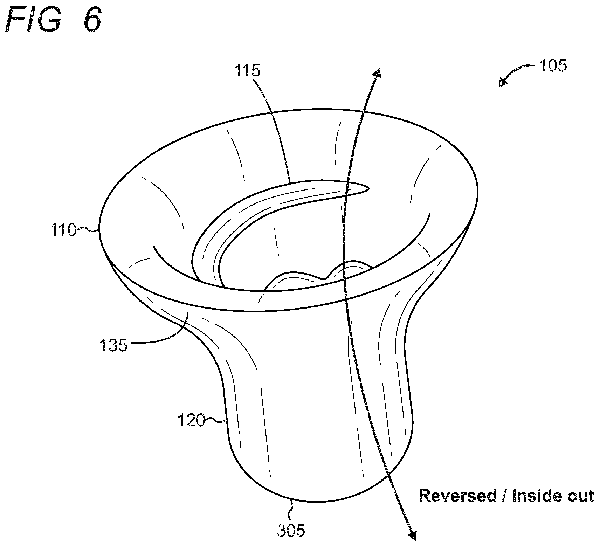

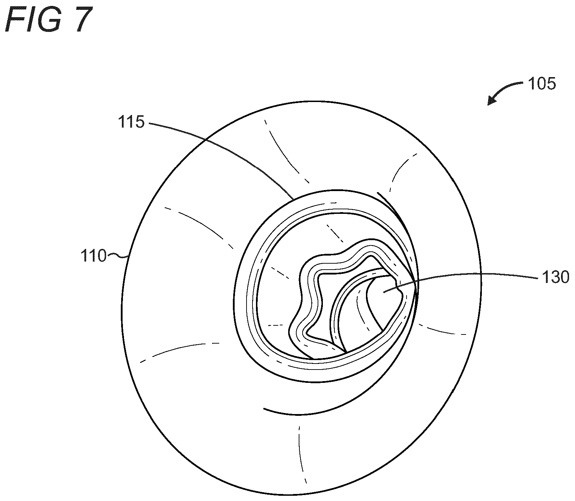

FIGs 6-8 show illustrative representations in which the ice cream cone 105 has been pushed inside out but still effectively operates as an ice cream cone. Since the ice cream cone is made of a malleable silicone, the user can push the exterior base 130 (not shown in FIGs 6-8) upward toward the upper portion 110 to reverse the cone, thereby putting the spiral ridge 115 on the inside of the cone. The interior base 305 and the interior surface 135 are now exposed on the outside of the cone. Such transformations can make the ice cream cone more fun and enjoyable for a user. For example, the user may like to see the spiral ridges 115 turn color when it touches the cold ice cream.

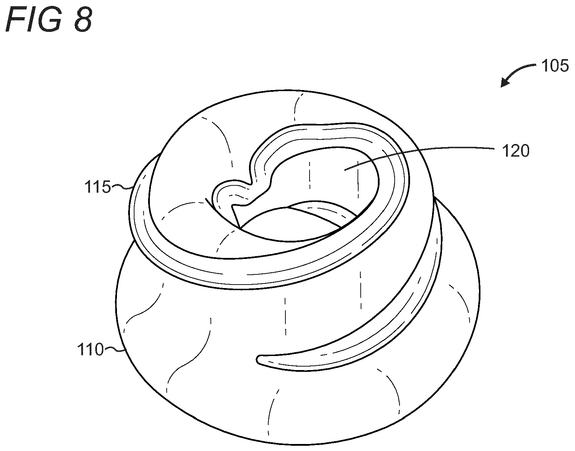

FIGs 6 and 8 show different sizes that can be created based on the amount the user configures the upper portion 110 relative to the base 130. The size of the stem in FIG 6 may be capable of holding two or three scoops of ice cream, and the size of the stem in FIG 8 may be capable of holding a single scoop of ice cream. While the reverse is shown, a similar size customization can be performed in the standard cone configuration, that is, not inside out. Furthermore, the malleability of the ice cream cone allows a user to stretch it to put more ice cream inside, unlike other rigid ice cream cones. Such malleability also allows a user to squeeze the remaining ice cream out that may have reached the bottom.

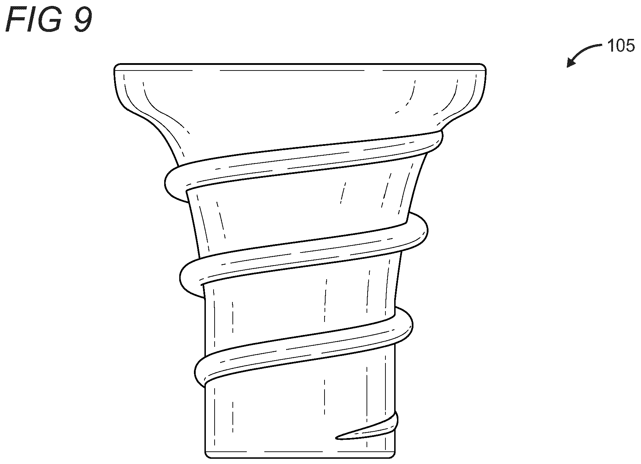

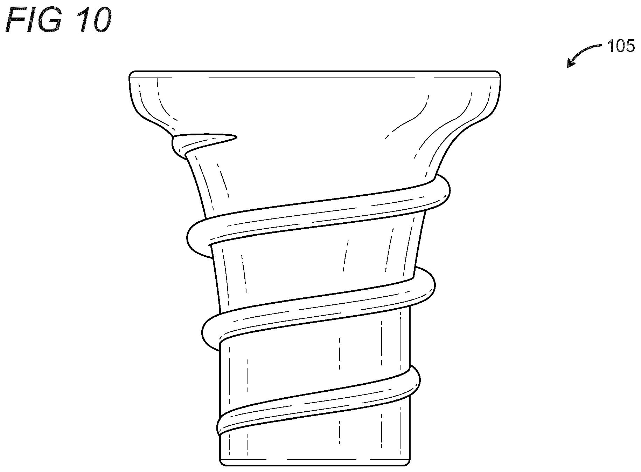

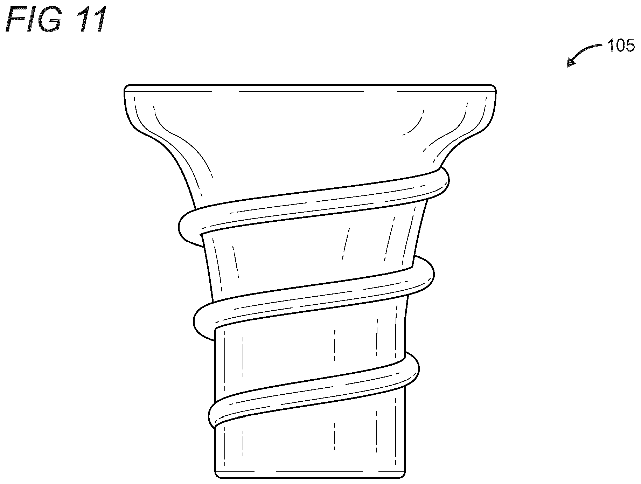

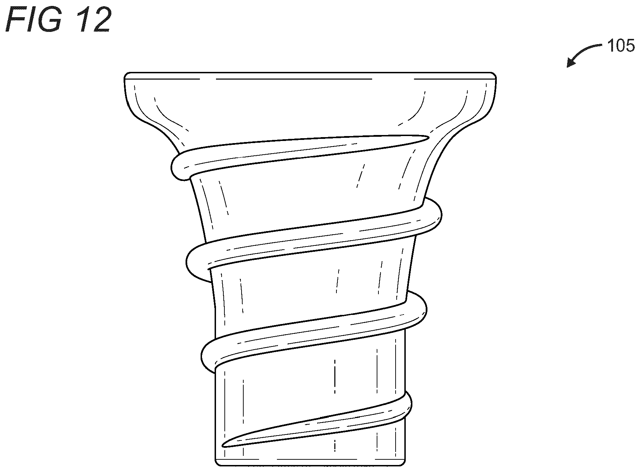

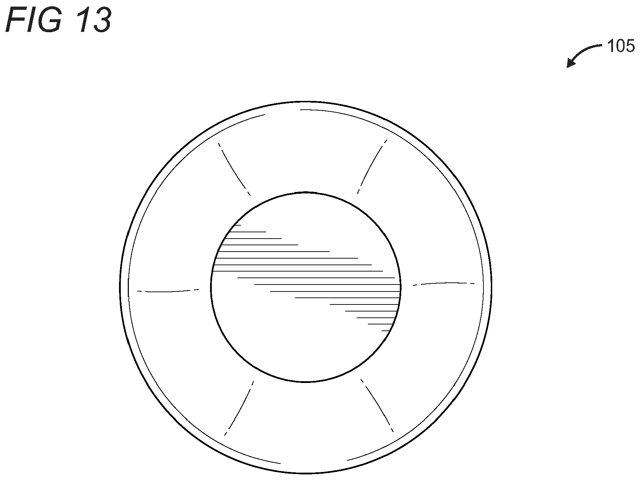

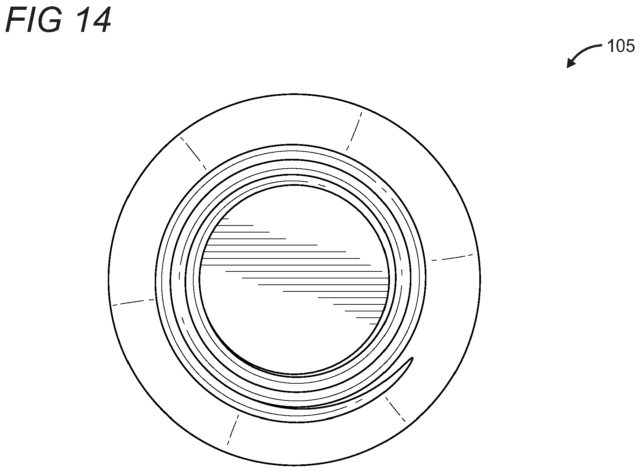

FIGs 9-14 show illustrative representations in which the silicone ice cream cone 105 is depicted from various angles, including a front view, rear review, left side view, right side view, top plan view, and bottom plan view.

Various exemplary embodiments of the silicone ice cream cone are described herein. According to the invention, a silicone ice cream cone is disclosed, comprising: a base; a stem extending upward from the base, wherein the stem has a cavity in its interior to receive ice cream; an upper portion having a greater diameter relative to the stem, wherein a slope of an interior surface of the upper portion gradually transitions from a vertical orientation to a substantially horizontal orientation; a spiral ridge positioned on an exterior of the ice cream cone, wherein the spiral ridge extends from a bottom portion of the stem toward at least an upper portion of the stem.

In a preferred embodiment, the spiral ridge extends to the upper portion. In a more preferred embodiment, when an object engages and covers the cavity on the stem, a suction action is created against the object which prevents the object from spilling. In a more preferred embodiment, the upper portion's slope causes any melted ice cream to fall toward an interior base of the stem. In a more preferred embodiment, an exterior upper portion meets a rim of the ice cream cone, and across from where the exterior upper portion slope meets the rim, an interior upper portion continues to gradually transition to the substantially horizontal orientation. In a more preferred embodiment, the silicone ice cream cone is reversible. In a more preferred embodiment, the silicone ice cream cone is comprised of a pigment that changes color responsive to changes in temperature.

Although the subject matter has been described in language specific to structural features and/or methodological acts, it is to be understood that the subject matter is defined by the appended claims.

## Claims

1. A silicone ice cream cone (105), comprising:
a base (130);
a stem (120) extending upward from the base (130), wherein the stem (120) has a cavity (125) in its interior to receive ice cream;
an upper portion (110) having a greater diameter relative to the stem (120),
wherein a slope of an interior surface (135) of the upper portion gradually transitions from a vertical orientation to a substantially horizontal orientation;
a spiral ridge (115) positioned on an exterior of the ice cream cone (105),
wherein the spiral ridge (115) extends from a bottom portion of the stem (120) toward at least an upper portion of the stem (120).

2. The silicone ice cream cone (105) of claim 1, wherein the spiral ridge (115) extends to the upper portion.

3. The silicone ice cream cone (105) of claim 2, wherein when an object engages and covers the cavity (125) on the stem (120), a suction action is created against the object which prevents the object from spilling.

4. The silicone ice cream cone (105) of claim 3, wherein the upper portion's (110) slope causes any melted ice cream to fall toward an interior base of the stem.

5. The silicone ice cream cone (105) of claim 4, wherein an exterior upper portion (135) meets a rim of the ice cream cone, and across from where the exterior upper portion slope meets the rim, an interior upper portion continues to gradually transition to the substantially horizontal orientation.

6. The silicone ice cream cone (105) of claim 5, wherein the silicone ice cream cone is reversible.

7. The silicone ice cream cone (105) of claim 6, wherein the silicone ice cream cone is comprised of a pigment that changes color responsive to changes in temperature.

## Patentansprüche

1. Ein Silikon-Eishörnchen (105), welches Folgendes umfasst:
eine Basis (130);
einen Stiel (120), der sich von der Basis (130) nach oben erstreckt, wobei der Stiel (120) in seinem Inneren einen Hohlraum (125) zur Aufnahme von Eiscreme aufweist;
einem oberen Abschnitt (110) mit einem größeren Durchmesser im Verhältnis zum Stiel (120), wobei eine Neigung einer Innenfläche (135) des oberen Abschnitts allmählich von einer vertikalen Ausrichtung in eine im Wesentlichen horizontale Ausrichtung übergeht;
eine spiralförmige Kante (115), die an einer Außenseite des Eishörnchens (105) positioniert ist, wobei sich die spiralförmige Kante (115) von einem unteren Abschnitt des Stiels (120) zu mindestens einem oberen Abschnitt des Stiels (120) erstreckt.

2. Das Silikon-Eishörnchen (105) nach Anspruch 1, wobei sich die spiralförmige Kante (115) bis zum oberen Abschnitt erstreckt.

3. Das Silikon-Eishörnchen (105) nach Anspruch 2, wobei, wenn ein Gegenstand in den Hohlraum (125) am Stiel (120) eingreift und diesen bedeckt, eine Saugwirkung gegen den Gegenstand erzeugt wird, die verhindert, dass der Gegenstand verschüttet wird.

4. Das Silikon-Eishörnchen (105) nach Anspruch 3, wobei die Neigung des oberen Abschnitts (110) bewirkt, dass geschmolzenes Eis in Richtung einer inneren Basis des Stiels fällt.

5. Das Silikon-Eishörnchen (105) nach Anspruch 4, wobei ein äußerer oberer Abschnitt (135) auf einen Rand der Eistüte trifft und gegenüber der Stelle, an der die Neigung des äußeren oberen Abschnitts auf den Rand trifft, ein innerer oberer Abschnitt allmählich in die im Wesentlichen horizontale Ausrichtung übergeht.

6. Das Silikon-Eishörnchen (105) nach Anspruch 5, wobei das Silikon-Eishörnchen umkehrbar ist.

7. Das Silikon-Eishörnchen (105) nach Anspruch 6, wobei das Silikon-Eishörnchen ein Pigment enthält, das seine Farbe in Reaktion auf Temperaturänderungen ändert.

## Revendications

1. Un cornet de crème glacée en silicone (105), comprenant :
une base (130) ;
une tige (120) s'étendant vers le haut à partir de la base (130), dans lequel la tige (120) a une cavité (125) à l'intérieur pour recevoir la crème glacée ;
une partie supérieure (110) ayant un plus grand diamètre par rapport à la tige (120), dans laquelle une pente d'une surface intérieure (135) de la partie supérieure passe progressivement d'une orientation verticale à une orientation sensiblement horizontale ;
une crête en spirale (115) positionnée sur l'extérieur du cornet de crème glacée (105), dans lequel la crête en spirale (115) s'étend d'une partie inférieure de la tige (120) vers au moins une partie supérieure de la tige (120).

2. Le cornet de crème glacée en silicone (105) selon la revendication 1, dans lequel la crête en spirale (115) s'étend jusqu'à la partie supérieure.

3. Le cornet de crème glacée en silicone (105) selon la revendication 2, dans lequel lorsqu'un objet s'engage et recouvre la cavité (125) de la tige (120), une action de succion est créée contre l'objet, ce qui empêche l'objet de se répandre.

4. Le cornet de crème glacée en silicone (105) selon la revendication 3, dans lequel la pente de la partie supérieure (110) fait tomber la crème glacée fondue vers la base intérieure de la tige.

5. Le cornet de crème glacée en silicone (105) selon la revendication 4, dans lequel une partie supérieure extérieure (135) rencontre un bord du cornet de crème glacée, et en face de l'endroit où la pente de la partie supérieure extérieure rencontre le bord, une partie supérieure intérieure continue à passer graduellement à l'orientation sensiblement horizontale.

6. Le cornet de crème glacée en silicone (105) selon la revendication 5, dans lequel le cornet de crème glacée en silicone est réversible.

7. Le cornet de crème glacée en silicone (105) selon la revendication 6, dans lequel le cornet de crème glacée en silicone est composé d'un pigment qui change de couleur en fonction des changements de température.
